(19) Europäisches Patentamt
European Patent Office
Office européen des brevets

(11) **EP 2 342 790 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **09784032.6**

(22) Anmeldetag: **15.10.2009**

(51) Int Cl.:
*H02H 7/085* *(2006.01)*     *H02H 7/08* *(2006.01)*
*H02H 3/44* *(2006.01)*

(86) Internationale Anmeldenummer:
**PCT/EP2009/063494**

(87) Internationale Veröffentlichungsnummer:
**WO 2010/052107 (14.05.2010 Gazette 2010/19)**

(54) **VERFAHREN UND VORRICHTUNG ZUM AKTIVIEREN EINER ÜBERWACHUNG DURCH EINE EINKLEMMSCHUTZFUNKTION BEI EINEM ELEKTRISCHEN SCHLIEßSYSTEM**

METHOD AND DEVICE FOR ACTIVATING MONITORING BY A JAMMING PROTECTION FUNCTION IN AN ELECTRICAL CLOSING SYSTEM

PROCÉDÉ ET DISPOSITIF D'ACTIVATION D'UNE SURVEILLANCE PAR UNE FONCTION DE PROTECTION ANTICOINCEMENT SUR UN SYSTÈME DE FERMETURE ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.11.2008 DE 102008043483**

(43) Veröffentlichungstag der Anmeldung:
**13.07.2011 Patentblatt 2011/28**

(73) Patentinhaber: **Robert Bosch GmbH**
**70442 Stuttgart (DE)**

(72) Erfinder: **GUARNIZO, Pablo Luis**
**70563 Stuttgart (DE)**

(56) Entgegenhaltungen:
**EP-A- 0 148 318**     **EP-A- 0 865 137**
**EP-A- 1 637 682**     **WO-A-2006/010349**
**DE-A1-102006 059 446**

**Beschreibung**

Technisches Gebiet

Die Erfindung betrifft elektrische Schließsysteme und insbesondere eine Einklemmschutzfunktion für elektrische Fensterheber bzw. Fahrzeugdächer.

Stand der Technik

Bei elektrischen Schließsystemen, wie z.B. elektrischen Fensterhebern oder Dachsystemen in einem Kraftfahrzeug, kann ein Schließteil, wie z.B. eine Fensterscheibe oder ein bewegliches Fahrzeugdach bei Fahrzeugen elektrisch geöffnet oder geschlossen werden, wobei ein Elektromotor zum Bewegen des Schließteils verwendet wird. Ein Schließvorgang des Schließteils wird automatisch mithilfe einer sogenannten Einklemmschutzfunktion überwacht. Dabei muss ein Einklemmen eines Objekts zwischen bewegtem Schließteil und feststehenden Elementen, wie z.B. ein Fensterrahmen, erkannt werden, bevor die vom Elektromotor über das Fenster auf das Objekt ausgeübte Einklemmkraft über einem bestimmten Betrag liegt. Die Einklemmschutzfunktion ist durch die gesetzlichen Vorschriften FMVSS 118 (S5) in den USA und 74/60/EWG (5.8.3) in der EU vorgeschrieben, wobei die Einklemmkraft mit maximal 100 N definiert ist.

Elektrische Fensterheber und Dachsysteme werden in der Regel durch ein Bedienelement betätigt. Durch die Betätigung des Bedienelementes wird ein Elektromotor angetrieben, wobei abhängig von der Drehrichtung des Elektromotors das Fenster oder das Dach geöffnet oder geschlossen wird. Um die Einklemmschutzfunktion zu realisieren, werden üblicherweise in einer entsprechenden Steuereinheit der Strom und/oder die Drehzahl des Gleichstrommotors ausgewertet, was eine kostengünstige Realisierung dieser Funktion erlaubt.

Aus der Druckschrift EP 0 865 137 A1 ist ein Verfahren zur Steuerung des Schließvorgangs von Schließvorrichtungen bei wenigstens einem elektromotorisch bewegten Teil bekannt, wobei eine Einklemmschutzfunktion in der Anlaufphase abhängig vom Schließweg abhängigen Verlauf mindestens einer Motorkenngröße beim Erreichen eines schließwegabhängigen Aktivierungswerts aktiviert wird.

Aus der Druckschrift EP 1 168 559 A1 ist bekannt, dass bei einem automatischen Fensterheber ein behinderndes Objekt anhand eines Verlaufs einer Drehzahl zu erkennen und entsprechend einer Einklemmschutzfunktion auszulösen, so dass die Kraft auf das Objekt begrenzt wird.

Aus der Druckschrift EP 0 148 318 A1 ist eine Sicherheitsschaltung für elektromotorische Fensterheber in Automobilen und ähnlichen Fahrzeugen bekannt, wobei eine Einklemmschutzfunktion abhängig vom Verlauf eines Gradienten aktiviert wird.

Aus der Druckschrift WO 2006/010349 A1 ist ein Verfahren und eine Vorrichtung zur Erkennung von Einklemmsituationen bei Verstellantrieben in Kraftfahrzeugen bekannt, wobei erfasste Messwerte gewichtet werden.

Die Einhaltung der gesetzlichen Anforderungen beim Motoranlauf ist anspruchsvoll, da die Motorkenngrößen, wie z.B. die Motordrehzahl und der Motorstrom abhängig von dem Antriebsspiel, der Reibungsänderung über die Lebensdauer des Schließsystems bzw. von der Stellung des Schließteils erheblich variieren können. Jedoch spielt die Reaktionsgeschwindigkeit beim Motoranlauf eine ausschlaggebende Rolle. Weiterhin ist erforderlich, dass beim Anlaufen des den Schließmechanismus antreibenden Elektromotors das Antriebsspiel keine Auswirkungen auf den Zeitpunkt des Aktivierens der Einklemmschutzfunktion hat.

Grundsätzlich ist bei einem elektrischen Fensterheber gefordert, die Einklemmschutzfunktion nach dem Betätigen des Bedienelements so schnell wie möglich zu aktivieren, so dass ein Einklemmen möglichst ohne gefährdende Verzögerung erkannt werden kann. Aufgrund der erheblichen insbesondere im Motoranlauf auftretenden Variation der Motorkenngrößen ist eine Aktivierung der Einklemmschutzfunktion gleichzeitig mit dem Betätigen des Bedienelementes zum Aktivieren des Fensterhebers nicht möglich, da Fehlerkennungen nicht ausgeschlossen werden können.

Es ist somit Aufgabe der vorliegenden Erfindung, ein Verfahren und eine Vorrichtung zum Aktivieren einer Überwachung durch eine Einklemmschutzfunktion beim Anlauf eines ein Schließsystem antreibenden Elektromotors zur Verfügung zu stellen, bei dem die Einklemmschutzfunktion so schnell wie möglich nach dem Starten des Schließsystems aktiviert wird und bei dem möglichst fehlerhafte Erkennungen eines Einklemmfalls vermieden werden können.

Offenbarung der Erfindung

Diese Aufgabe wird durch das Verfahren zum Aktivieren einer Überwachung einer Einklemmschutzfunktion gemäß Anspruch 1 sowie durch die Vorrichtung gemäß dem nebengeordneten Anspruch 5 gelöst.

Weitere vorteilhafte Ausgestaltungen der Erfindung sind in den abhängigen Ansprüchen angegeben.

Gemäß einem ersten Aspekt ist ein Verfahren zum Aktivieren einer Einklemmschutzfunktion in einem elektrischen Schließsystem vorgesehen, wobei die Einklemmschutzfunktion ausgebildet ist, eine Bewegung eines Schließteils in eine Bewegungsrichtung abzubrechen, wenn erkannt wird, dass die Bewegung des Schließteils durch ein eingeklemmtes Objekt behindert wird. Das Verfahren umfasst mit folgende Schritte:

- Bereitstellen von nacheinander erfassten Werten einer Motorgröße eines Motors, der die Bewegung des Schließteils bewirkt, wobei die Motorgröße eine Angabe zu einem von dem Motor bereitgestellten Antriebsmoment angibt;

- Bestimmen eines Gradientenverlaufs aus den nacheinander erfassten Werten der Motorgröße, wobei der Gradientenverlauf mit Hilfe eines Ableitungsverfahrens ermittelt wird, das eine Gewichtung der einzelnen nacheinander erfassten Werte der Motorgröße abhängig von ihrer Erfassungsreihenfolge vorsieht;

- Ermitteln eines Zeitpunktes zum Aktivieren der Einklemmschutzfunktion abhängig von dem bestimmten Gradientenverlauf.

Eine Idee des obigen Verfahrens besteht darin, eine Motorgröße, z.B. den Motorstrom oder die Motordrehzahl, zu beobachten und gemäß einem Ableitungsverfahren einen Gradientenverlauf zu ermitteln. Abhängig von dem Gradientenverlauf wird nach dem Starten des Schließsystems die Einklemmschutzfunktion aktiviert. Das Ableitungsverfahren sieht vor, den Verlauf des Gradienten zu gewichten, so dass die weiter zurückliegenden, d.h. die älteren Gradientenwerte des Motorstroms, niedriger gewichtet werden als die aktuelleren. Da die Aktivierung der Einklemmschutzfunktion von dem Gradientenverlauf der Motorgröße abhängt, können so aufgrund von Toleranzen, Störungen oder sonstigen Einflüssen, oder aufgrund des Antriebsspiels einem Rauschen ähnliche Schwankungen des Gradienten für die Bestimmung des lokalen Maximums so gefiltert werden, dass eine Verzögerung bei der Auswertung des Gradientenverlaufs reduziert wird, wie dies beispielsweise bei einer einfachen Tiefpassfilterung der Fall wäre.

Weiterhin kann der Zeitpunkt zum Aktivieren der Einklemmschutzfunktion abhängig von einer Detektion eines lokalen Maximums des bestimmten Gradientenverlaufs bestimmt werden.

Der Zeitpunkt zum Aktivieren der Einklemmschutzfunktion kann bestimmt werden, nachdem ein Gradientenwert des Gradientenverlaufs einen negativen Wert angenommen hat und ein Nulldurchgang des Gradientenverlaufs in positiver Richtung erfolgt ist.

Gemäß einem Teilaspekt wird der Zeitpunkt zum Aktivieren der Einklemmschutzfunktion abhängig von einem Verhältnis zwischen mechanischer Leistung und elektrischer Leistung des Motors durchgeführt. Dadurch wird für die Erkennung des Antriebsspiels beim Motoranlauf ohne Berücksichtigung der letzten Richtungsbewegung die gesamte Leistungsbilanz, mechanisch wie elektrisch, beobachtet und ausgewertet.

Weiterhin kann das Ableitungsverfahren zum Bestimmen des Gradientenverlaufs gemäß einer Übertragungsfunktion $H(z) = K \times [z-1/z-\lambda]$ durchgeführt werden.

Gemäß einem weiteren Aspekt ist eine Vorrichtung zum Aktivieren einer Einklemmschutzfunktion in einem elektrischen Schließsystem vorgesehen. Die Einklemmschutzfunktion ist ausgebildet, eine Bewegung eines Schließteils in eine Bewegungsrichtung abzubrechen, wenn erkannt wird, dass die Bewegung des Schließteils durch ein eingeklemmtes Objekt behindert wird. Die Vorrichtung umfasst:

- eine Erfassungseinheit zum Bereitstellen von nacheinander erfassten Werten einer Motorgröße eines Motors, der die Bewegung des Schließteils bewirkt, wobei die Motorgröße eine Angabe zu einem von dem Motor bereitgestellten Antriebsmoment angibt;
- eine Steuereinheit zum Bestimmen eines Gradientenverlaufs aus den nacheinander erfassten Werten der Motorgröße, wobei der Gradientenverlauf mit Hilfe eines Ableitungsverfahrens ermittelt wird, das eine Gewichtung der einzelnen nacheinander erfassten Werte der Motorgröße abhängig von ihrer Erfassungsreihenfolge vorsieht, und zum Ermitteln eines Zeitpunktes zum Aktivieren der Einklemmschutzfunktion abhängig von dem bestimmten Gradientenverlauf.

Gemäß einem weiteren Aspekt ist ein Motorsystem mit der obigen Vorrichtung und einem Elektromotor vorgesehen.

Gemäß einem weiteren Aspekt ist ein Schließsystem, insbesondere ein Fensterhebersystem, mit dem obigen Motorsystem und einem Schließmechanismus vorgesehen, über den ein Schließteil bewegbar ist.

Gemäß einem weiteren Aspekt ist ein Computerprogramm vorgesehen, das, wenn es auf einer Datenverarbeitungseinheit ausgeführt wird, das obige Verfahren ausführt.

Kurze Beschreibung der Zeichnungen

Bevorzugte Ausführungsformen der Erfindung werden nachfolgend anhand der beigefügten Zeichnungen näher erläutert. Es zeigen:

Fig. 1 eine schematische Darstellung eines automatischen Fensterhebersystems z.B. für ein Kraftfahrzeug;

Fig. 2 ein Flussdiagramm zur Veranschaulichung des in der Steuereinheit implementierten Verfahrens zur Aktivierung der Einklemmschutzfunktion;

Fig. 3 ein Verlauf eines Motorstroms und dessen mit dem Parameter $\lambda$ ermittelten Gradienten beim Anlaufen des Elektromotors mit Antriebsspiel;

Fig. 4 Zeitdiagramme zur Veranschaulichung der Verläufe des Motorstroms, des Steuerzustands, des Motorstromgradienten, der elektrischen Leistung und der mechanischen Leistung bei einem Motoranlauf mit Antriebsspiel; und

Fig. 5 Zeitdiagramme zur Veranschaulichung der Verläufe des Motorstroms, des Steuerzustands, des Motorstromgradienten, der elektrischen Leistung und der mechanischen Leistung bei einem Motoranlauf ohne Antriebsspiel.

Beschreibung von Ausführungsformen

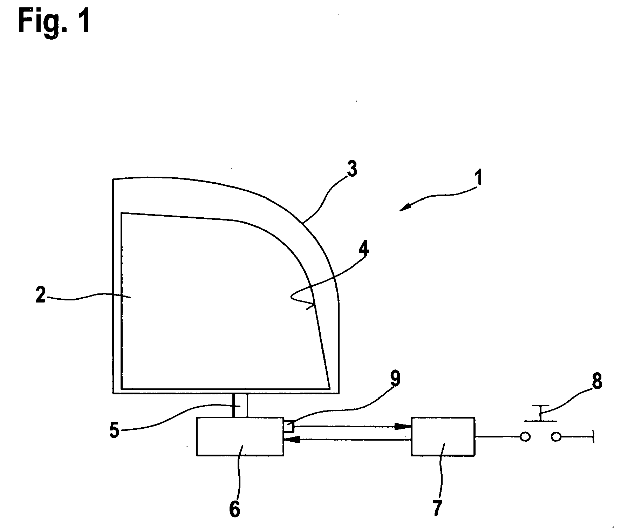

In Fig. 1 ist beispielhaft ein Fensterhebersystem 1 schematisch dargestellt, bei dem eine Fensterscheibe 2 als Schließteil vorgesehen ist, die zu einem Fensterrahmen 3 bewegt werden kann und das Fenster dadurch geöffnet und geschlossen werden kann. Dazu kann die Fensterscheibe 2 mit Hilfe eines Schließmechanismus 5 verfahren werden, so dass sich eine Kante 4 der Fensterscheibe 2 auf den Fensterrahmen 3 zubewegt oder sich von diesem entfernt, um das Fenster zu schließen bzw. zu öffnen.

Der Schließmechanismus 5 wird von einem Elektromotor 6 angetrieben, dem eine Versorgungsspannung direkt bereitgestellt wird oder von einer Steuereinheit 7 bereitgestellt wird, wenn eine entsprechende Bedienvorrichtung 8, z.B. ein Schalter, wie z.B. ein Druckschalter, von einem Benutzer betätigt wird, um den Fensterheber zu betätigen. Die Steuereinheit 7 realisiert alle notwendigen Funktionen zum Ansteuern des Elektromotors 6 in einer bestimmten Drehrichtung, so dass die Fensterscheibe 2 in Richtung des Fensterrahmens 3 zum Schließen des Fensters bewegt werden kann.

Zum Detektieren des Zustands des Elektromotors ist ein Stromsensor 9 als Erfassungseinheit vorgesehen, der eine Angabe über einen Stromfluss durch den Elektromotor an die Steuereinheit 7 übermittelt.

Anstelle des Fensterhebersystem 1 kann jedes andere Schließsystem betrachtet werden, bei dem ein bewegliches Schließteil so verfahrbar ist, dass ein Einklemmen eines Objektes auftreten kann.

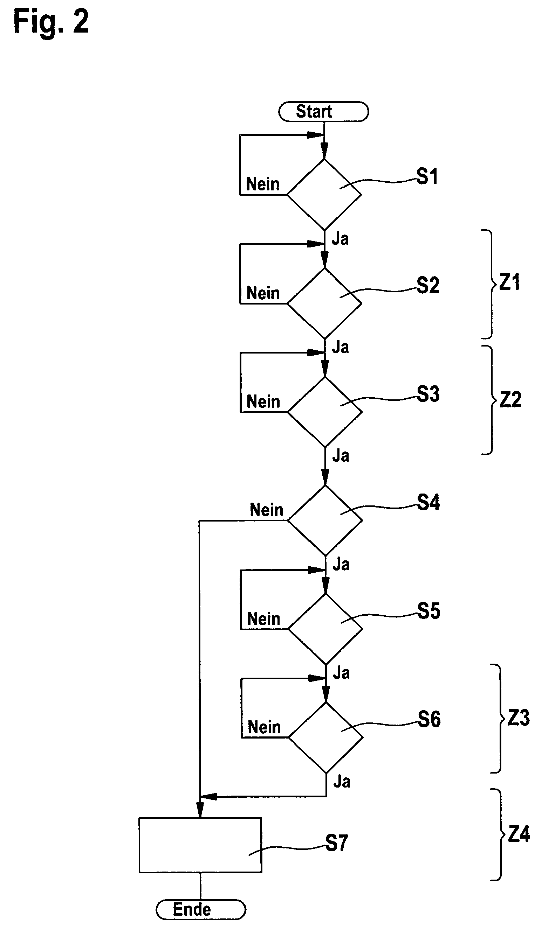

In Fig. 2 ist ein Flussdiagramm zur Realisierung der Funktion des Fensterhebersystems 1 dargestellt. Insbesondere wird dargestellt, dass das Anlaufen des Elektromotors 6 nach Betätigen des Bedienelementes 8 und das Aktivieren der Einklemmschutzfunktion, nachdem das Risiko eines versehentlichen Auslösens der Einklemmschutzfunktion während einer Anlaufphase reduziert ist.

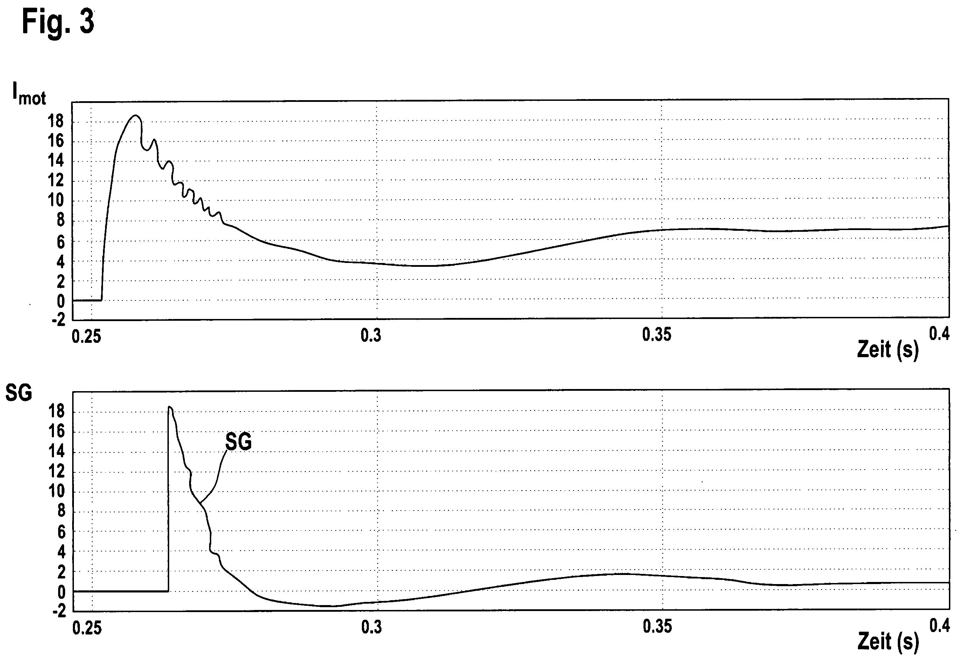

Im Schritt S1 wird abgefragt, ob das Bedienelement 8 betätigt worden ist. Ohne eine Betätigung des Bedienelements 8 findet keine weitere Funktion im Steuergerät 7 statt (Alternative: nein). Wird das Bedienelement 8 betätigt (Alternative: ja), so steigt, wie in Fig. 3 (obere Kennlinie) gezeigt, der Motorstrom $I_{mot}$, der von dem Stromsensor 9 an dem Elektromotor 6 gemessen wird, steil an, da ein hohes Drehmoment zum Überwinden der Haftreibung und zum Bereitstellen des Anlaufmomentes benötigt wird. Anschließend sinkt der Motorstrom $I_{mot}$ ab, und zwar um einen Betrag, der davon abhängt, ob die Kopplung zwischen Elektromotor 6 mit dem Schließmechanismus 3 ein Spiel aufweist oder nicht. Besteht die Kopplung zwischen der Fensterscheibe 2 und dem Elektromotor 6, so wird die Fensterscheibe angefahren, was sich durch einen ansteigenden Motorstrom $I_{mot}$ bemerkbar macht, der sich auf einen bestimmten Wert einschwingt, wenn sich die Fensterscheibe 2 mit konstanter Hebegeschwindigkeit bewegt.

Als Motorgröße wird der Motorstrom $I_{mot}$ mithilfe des Stromsensors 9 erfasst. Der Stromsensor 9 kann beispielsweise einen Shunt aufweisen. Die über dem Shunt abfallende Spannung ist proportional zu dem fließenden Motorstrom $I_{mot}$ und kann mithilfe eines Mikrocontrollers, der in der Steuereinheit 7 vorgesehen sein kann, in ein digitales Signal gewandelt werden, so dass der Motorstrom $I_{mot}$ als Motorgröße in Form eines digitalen Signals der Steuereinheit 7 zur Verfügung steht. Der digitalisierte Motorstrom $I_{mot}$ kann ausgewertet werden, und es kann beispielsweise eine Motordrehzahl aus dem Stromwerteverlauf abgeleitet werden.

Die Steuereinheit 7 realisiert eine Einklemmschutzfunktion, die, wenn sie aktiviert ist, Motorparameter wie Motorstrom $I_{mot}$, Motorstromgradient SG und dgl. überwacht und ein Abschalten oder Reversieren des Elektromotors 6 auslöst, wenn durch die Überprüfung der zugeführten Motorgröße ein Einklemmen eines Gegenstandes oder eines Körperteils erkannt worden ist. Auf das Auslösen der Einklemmschutzfunktion soll im Folgenden nicht näher eingegangen werden.

Das vorliegende Verfahren betrifft vorwiegend den Fall des Aktivierens der Einklemmschutzfunktion bei einem Anlaufen des Elektromotors 6, da dort erhebliche Schwankungen des aufzubringenden Motoranlaufmoments aufgrund von Antriebsspiel, Reibungsänderung und dgl. gefordert werden können. Ein zuverlässiges Erkennen eines Einklemmens durch die Einklemmschutzfunktion durch Beobachtung des Motorstroms $I_{mot}$, der direkt von dem aufzubringenen Antriebsmoment abhängt, ist währen dieser Phase nicht gewährleistet. Trotzdem soll die Einklemmschutzfunktion so schnell wie möglich nach Überwinden der variablen Anlaufphase aktiviert werden, so dass keine unzulässige Gefährdung eines Objektes oder Körperteils, das sich zwischen Fensterscheibe 2 und Fensterrahmen befindet, auftreten kann.

Die Erkennung des Zeitpunkts zum Aktivieren der Einklemmschutzfunktion wird anhand eines Gradientenverlaufs durchgeführt, wobei die Änderung des Motorstromgradienten SG beobachtet wird. Dabei wird abhängig von erreichten lokalen Maxima und Minima des Stromgradientenverlaufs SG eine Entscheidung über das Aktivieren der Einklemmschutzfunktion vorgenommen. Anstelle einer herkömmlichen Ableitung des Motorstromverlaufs zum Bestimmen des Motorstromgradienten SG wird der Motorstromgradient SG mithilfe der folgenden Übertragungsfunktion gebildet:

$$H(z) = K \times \left[ \frac{z - 1}{z - \lambda} \right]$$

Die Übertragungsfunktion entspricht einer Z-Transformation der diskreten Motorstromwerte. Mit dem Parameter $\lambda$ wird die Reaktionsgeschwindigkeit der zeitlichen Ableitung des Motorstroms $I_{mot}$ bestimmt. Der in die Zeitebene zurücktransformierte Wert H(z) entspricht dann SG.

In Fig. 3 (untere Kennlinie) ist der mit der Übertragungsfunktion modellierte Motorstromgradientenverlauf SG mit einem λ von 0,9 bei einem Motoranlauf dargestellt. Der Parameter λ wirkt als Gewichtungsfaktor, mit dem für die für den Motorstromgradientenverlauf länger zurückliegende, d.h. ältere Gradientenwerte SG weniger gewichtet werden als aktuellere. λ bestimmt also die Reaktionsgeschwindigkeit der zeitlichen Ableitung.

In Fig. 3 erkennt man beim Verlauf des Motorstromgradienten SG, dass die Stromänderungen des Motorstroms $I_{mot}$ im Motorstromgradientenverlauf SG schneller zu erkennen sind als im Verlauf des Motorstroms $I_{mot}$.

In der Steuereinheit 7 ist eine Zustandsmaschine implementiert, die nach dem Betätigen des Bedienelementes 8 in Schritt S1 mehrere Motorzustände Z abfragt, bevor die Einklemmschutzfunktion aktiviert wird.

Im Schritt S2 wird abgefragt, ob der mit der obigen Übertragungsfunktion (bei einem bestimmten ersten Gradientenparameter $\lambda_1$ ermittelte aktuelle Stromgradient größer 0 ist, um so das Anlaufen des Elektromotors 6 zu erkennen. Solange der Stromgradient größer 0 liegt ein erster Zustand Z1 vor. Ist der Motorstromgradient größer 0 (Alternative: ja), so wird in einem Schritt S3 abgewartet, bis der Motorstromgradientenverlauf nun einen Nulldurchgang hat und somit negativ wird. Ist dies nicht der Fall (Alternative: nein), wird der erste Motorzustand Z1 solange beibehalten, bis der Motorstromgradient negativ wird (Alternative: ja).

Nach dem Zustandsübergang zu dem Motorzustand Z2, der durch den Nulldurchgang ausgelöst wird, wird ein neuer Parameter $\lambda_2$ verwendet. Ist der mit dem bestimmten zweiten Gradientenparameter $\lambda_2$ ermittelte aktuelle Stromgradient negativ, was einem zweiten Motorzustand Z2 entspricht, wird in einem nächsten Schritt S4 abgefragt, wie das Verhältnis der mechanischen Motorleistung zur elektrischen Leistung ist und abhängig von dem sich ergebenden Wert wird zu Schritt S5 gesprungen oder zu Schritt S7 gesprungen, der einem vierten Motorzustand Z4 entspricht.

Die Leistungsbilanz des Elektromotors ist wie folgt:

$$U \cdot I = I^2 \cdot R + K \cdot I \cdot \Omega,$$

wobei U der Versorgungsspannung, I der Stromaufnahme des Elektromotors 6, R dem Ohmschen Widerstand der Ankerwicklung, K der Motorkonstanten und Ω der Motordrehzahl entsprechen. Das Produkt U I entspricht der aufgenommenen Gesamtleistung, die durch entsprechende Messungen in der Steuereinheit 7 (nicht gezeigt), vorgenommen werden können. Das Produkt $I^{12} \cdot R$ beschreibt die elektrische Verlustleistung der Ankerwicklung, die sich in einer Wärmeerzeugung des Elektromotors 6 bemerkbar macht. Das Produkt K · I · Ω ist die mechanische Leistung, die aus mechanischer Verlustleistung wie z.B. Reibung, Luftwiderstand und dgl. und der entnehmbaren mechanischen Nutzleistung zusammengesetzt ist.

Die Abfrage des Schritts S4 ermittelt, ob das Verhältnis aus mechanischer Leistung $P_{mech}$ und elektrischer Leistung $P_{el}$, nämlich K - I - Ω / $I^2 \cdot R$ größer ist als ein bestimmter Schwellwert oder nicht. Mögliche Schwellwerte können zwischen 2 und 4 liegen, vorzugsweise zwischen 2,5 und 3,5, insbesondere bei 3.

Ist das Verhältnis kleiner als ein bestimmter Schwellwert (Alternative: Nein), so liegt kein Antriebsspiel vor und es wird der vierte Motorzustand Z4 eingenommen und zu Schritt S7 gesprungen . Ist das Verhältnis größer als ein bestimmter Schwellwert (Alternative: Ja), so ist ein Antriebsspiel erkannt worden, und es wird zu Schritt S5 gesprungen. In Schritt S5 wird abgefragt, ob ein weiterer Nulldurchgang in positiver Richtung vorliegt. Wird ein weiterer Nulldurchgang detektiert wird in den dritten Motorzustand Z3 übergegangen. In dem dritten Motorzustand Z3 wird der Motorstromgradient mit einem dritten Gradientenparameter $\lambda_3$ berechnet. Mit Hilfe des dritten Gradientenparameters $\lambda_3$ wird infolge ein Maximum des Motorstromgradienten ermittelt (Schritt S7), und sobald das Maximum des Motorstromgradienten ermittelt worden ist (Alternative Ja), wird zu dem vierten Motorzustand Z4 übergegangen bzw. zu Schritt S7 gesprungen, indem die Einklemmschutzfunktion aktiviert wird.

Die Gradientenparameter $\lambda_1$, $\lambda_2$ und $\lambda_3$ können verschieden sein und empirisch abhängig von dem Fensterhebersystem 1 ermittelt werden. Vorzugsweise liegen die Parameter von λ zwischen 0,9 und 1, vorzugsweise zwischen 0,95 und 0,96.

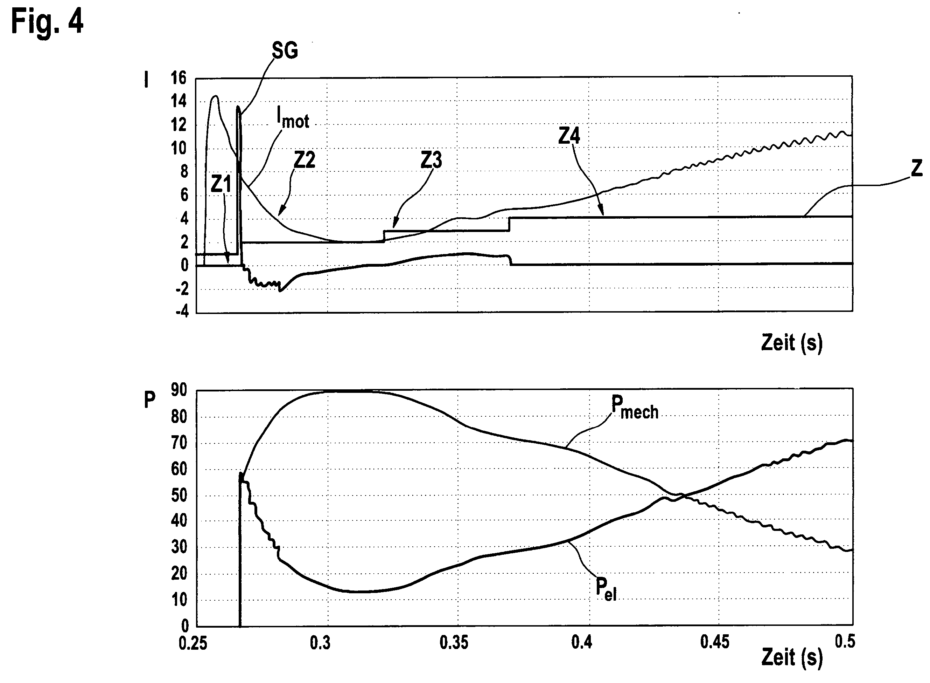

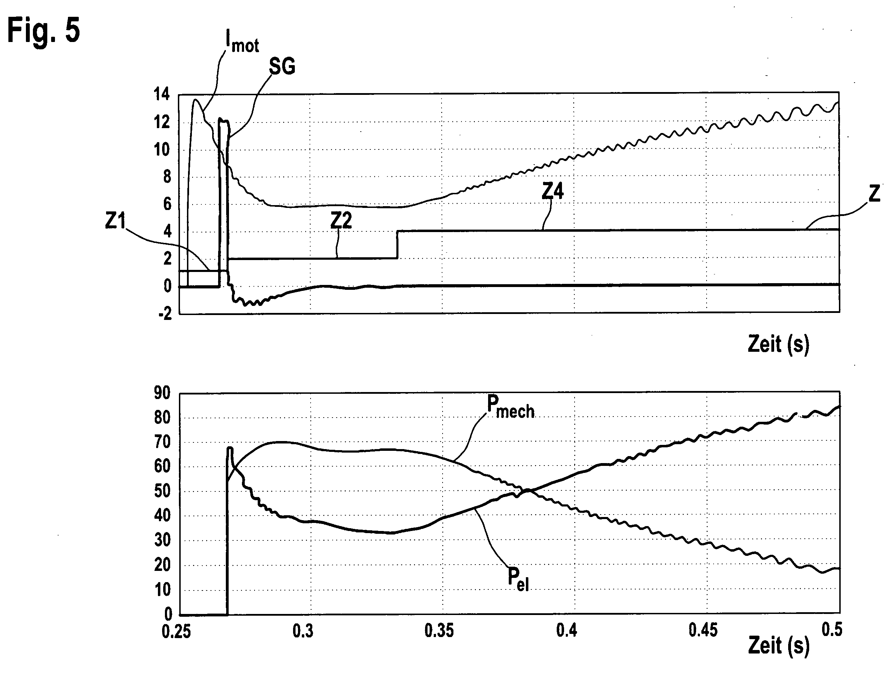

In den Figuren 4 und 5 sind die zeitlichen Verläufe des Motorstromgradienten unter Berücksichtigung der oben bezeichneten Übertragungsfunktion bei λ = 0,9, die Motorzustände als Pegel eines Signals Z, der elektrischen Leistung und der mechanischen Leistung bei einem Motoranlauf mit Antriebsspiel bzw. einem Motoranlauf ohne Antriebsspiel dargestellt. Der Motoranlauf weist ein Antriebsspiel auf, z.B. wenn die letzte Bewegungsrichtung der Fensterscheibe 2 nach unten gerichtet war, und nun die Fensterscheibe 2 wieder nach oben bewegt werden soll, um dieses zu schließen.

Bei einem Motoranlauf ohne Antriebsspiel kann beispielsweise ein Anlaufen des Motors sein, dessen letzte Bewegungsrichtung nach oben gerichtet war, und dessen angesteuerte Bewegungsrichtung ebenfalls nach oben ist. Das stufenförmige Signal zeigt die Motorzustände an. Sobald mithilfe des Stromgradienten ein positiver Stromgradient erkannt wird, wechselt das Zustandssignal z in einen Zustand 1. Sobald der Stromgradient negative Werte annimmt, wechselt das Zustandssignal des Motorzustandes auf den Motorzustand Z2. Bei einem nächsten Nulldurchgang des mit dem dritten Gradientenparameter $\lambda_3$ ermittelten aktuellen Stromgradient in positiver Richtung wird der dritte Motorzustand Z3 angenommen, da nach dem Nulldurchgang des Motorstromgradienten von negativen Werten zu positiven Werten das Verhältnis der mechanischen Leistung zur elektrischen Leistung größer als ein vorgegebener Schwellwert war, wie z.B. im vorliegenden Fall größer als 3 war. Nun wird der Motorstromgradientenverlauf auf das nächste lokale Maximum untersucht, wobei nach eindeutigem Erkennen des lokalen Maximums der vierte Motorzustand Z4 eingenommen wird, bei dem die Einklemmschutzfunktion aktiviert wird.

In Fig. 5 ist dargestellt, dass der Motorstromgradient sich im Motorzustand Z2 bei negativen Werten aufgrund des fehlenden Antriebsspiels langsam an den Wert null annähert und bei Erreichen des Werts Null im zweiten Motorzustand Z2 wird überprüft, ob das Verhältnis der mechanischen Leistung zur elektrischen Leistung einen Schwellwert übersteigt. Wenn dieser Schwellwert nicht überschritten wird, wie dies bei fehlendem Antriebsspiel der Fall ist, geht die Zustandsmaschine, die in der Steuereinheit 7 realisiert ist, direkt von dem zweiten Motorzustand Z2 auf den vierten Motorzustand Z4 über, in dem die Einklemm schutzfunktion aktiviert wird.

**Patentansprüche**

1. Verfahren zum Aktivieren einer Einklemmschutzfunktion in einem elektrischen Schließsystem, wobei die Einklemmschutzfunktion ausgebildet ist, eine Bewegung eines Schließteils in eine Bewegungsrichtung abzubrechen, wenn erkannt wird, dass die Bewegung des Schließteils (2) durch ein eingeklemmtes Objekt behindert wird; mit folgenden Schritten:

- Bereitstellen von nacheinander erfassten Werten einer Motorgröße ($I_{mot}$) eines Motors (6), der die Bewegung des Schließteils bewirkt, wobei die Motorgröße ($I_{mot}$) eine Angabe zu einem von dem Motor (6) bereitgestellten Antriebsmoment angibt;
- Bestimmen eines Gradientenverlaufs aus den nacheinander erfassten Werten der Motorgröße ($I_{mot}$), wobei der Gradientenverlauf mit Hilfe eines Ableitungsverfahrens ermittelt wird, das eine Gewichtung der einzelnen nacheinander erfassten Werte der Motorgröße ($I_{mot}$) abhängig von ihrer Erfassungsreihenfolge vorsieht;
- Ermitteln eines Zeitpunktes zum Aktivieren der Einklemmschutzfunktion abhängig von dem bestimmten Gradientenverlauf, **wobei der Zeitpunkt zum Aktivieren der Einklemmschutzfunktion abhängig von einem Verhältnis zwischen mechanischer Leistung ($P_{mech}$) und elektrischer Leistung ($P_{el}$) des Motors (6) durchgeführt wird.**

2. Verfahren nach Anspruch 1, wobei der Zeitpunkt zum Aktivieren der Einklemmschutzfunktion abhängig von einer Detektion eines lokalen Maximums des bestimmten Gradientenverlaufs bestimmt wird.

3. Verfahren nach Anspruch 2, wobei der Zeitpunkt zum Aktivieren der Einklemmschutzfunktion bestimmt wird, nachdem ein Gradientenwert (SG) des Gradientenverlaufs (SG) einen negativen Wert angenommen hat und ein Nulldurchgang des Gradientenverlaufs (SG) in positiver Richtung erfolgt ist.

4. Verfahren nach Anspruch 1 oder 2, wobei das Ableitungsverfahren zum Bestimmen des Gradientenverlaufs gemäß einer Übertragungsfunktion H(z) =K x [z-1/z-λ] durchgeführt wird.

5. Vorrichtung zum Aktivieren einer Einklemmschutzfunktion in einem elektrischen Schließsystem, wobei die Einklemmschutzfunktion ausgebildet ist, eine Bewegung eines Schließteils (2) in eine Bewegungsrichtung abzubrechen, wenn erkannt wird, dass die Bewegung des Schließteils (2) durch ein eingeklemmtes Objekt behindert wird; umfassend:

- eine Erfassungseinheit (9) zum Bereitstellen von nacheinander erfassten Werten einer Motorgröße ($I_{mot}$) eines Motors (6), der die Bewegung des Schließteils (2) bewirkt, wobei die Motorgröße ($I_{mot}$) eine Angabe zu einem von dem Motor (6) bereitgestellten Antriebsmoment angibt;
- eine Steuereinheit (7) zum Bestimmen eines Gradientenverlaufs aus den nacheinander erfassten Werten der Motorgröße ($I_{mot}$), wobei der Gradientenverlauf mit Hilfe eines Ableitungsverfahrens ermittelt wird, das eine Gewichtung der einzelnen nacheinander erfassten Werte der Motorgröße ($I_{mot}$) abhängig von ihrer Erfassungsreihenfolge vorsieht, und zum Ermitteln eines Zeitpunktes zum Aktivieren der Einklemmschutzfunktion abhängig von dem bestimmten Gradientenverlauf,

**wobei der Zeitpunkt zum Aktivieren der Einklemmschutzfunktion abhängig von einem Verhältnis zwischen mechanischer Leistung ($P_{mech}$) und elektrischer Leistung ($P_{el}$) des Motors (6) durchgeführt wird.**

6. Motorsystem mit einer Vorrichtung nach Anspruch 5 und einem Elektromotor (6).

7. Schließsystem, insbesondere ein Fensterhebersystem, mit einem Motorsystem nach Anspruch 6 und mit einem Schließmechanismus (5), über den ein Schließteil bewegbar ist.

8. Computerprogramm, das, wenn es auf einer Datenverarbeitungseinheit ausgeführt wird, ein Verfahren gemäß einem der Ansprüche 1 bis 4 ausführt.

## Claims

1. Method for activating a trapping prevention function in an electrical closing system, with the trapping prevention function being designed to interrupt a movement of a closing part in a movement direction when it is identified that the movement of the closing part (2) is impeded by a trapped object; comprising the following steps:

   - supplying successively detected values of a motor variable ($I_{mot}$) of a motor (6) which causes the movement of the closing part, with the motor variable ($I_{mot}$) providing information about a drive torque which is supplied by the motor (6);
   - determining a gradient profile from the successively detected values of the motor variable ($I_{mot}$), with the gradient profile being ascertained with the aid of a derivation method which weights the individual successively detected values of the motor variable ($I_{mot}$) as a function of the order in which they were detected;
   - ascertaining a time for activating the trapping prevention function as a function of the determined gradient profile, wherein the time for activating the trapping prevention function is carried out as a function of a ratio between the mechanical power ($P_{mech}$) and the electrical power ($P_{el}$) of the motor (6).

2. Method according to Claim 1, wherein the time for activating the trapping prevention function is determined as a function of the detection of a local maximum of the determined gradient profile.

3. Method according to Claim 2, wherein the time for activating the trapping prevention function is determined after a gradient value (SG) of the gradient profile (SG) has assumed a negative value and there is a zero crossing of the gradient profile (SG) in the positive direction.

4. Method according to Claim 1 or 2, wherein the derivation method for determining the gradient profile is carried out according to a transfer function $H(z) = K \times [z-1/z-\lambda]$.

5. Device for activating a trapping prevention function in an electrical closing system, with the trapping prevention function being designed to interrupt a movement of a closing part (2) in a movement direction when it is identified that the movement of the closing part (2) is impeded by a trapped object; comprising:

   - a detection unit (9) for supplying successively detected values of a motor variable ($I_{mot}$) of a motor (6) which causes the movement of the closing part (2), with the motor variable ($I_{mot}$) providing information about a drive torque which is supplied by the motor (6);
   - a control unit (7) for determining a gradient profile from the successively detected values of the motor variable ($I_{mot}$), with the gradient profile being ascertained with the aid of a derivation method which weights the individual successively detected values of the motor variable ($I_{mot}$) as a function of the order in which they were detected, and for ascertaining a time for activating the trapping prevention function as a function of the determined gradient profile, wherein the time for activating the trapping prevention function is carried out as a function of a ratio between the mechanical power ($P_{mech}$) and the electrical power ($P_{el}$) of the motor (6).

6. Motor system having a device according to Claim 5 and an electric motor (6).

7. Closing system, in particular a window winder system, having a motor system according to Claim 6 and having a closing mechanism (5) by means of which a closing part can be moved.

8. Computer program which, when it is run on a data processing unit, executes a method according to one of Claims 1 to 4.

## Revendications

1. Procédé d'activation d'une fonction de protection anti-coincement dans un système de fermeture électrique, dans lequel la fonction de protection anti-coincement est conçue pour interrompre le mouvement d'une pièce fermante dans une direction de mouvement lorsqu'il est détecté que le mouvement de la partie fermante (2) est entravé par un objet coincé ; comprenant les étapes consistant à :

   - fournir des valeurs détectées successivement d'une grandeur de moteur ($I_{mot}$) d'un moteur (6) qui provoque le mouvement de la partie fermante, dans lequel la grandeur de moteur ($I_{mot}$) fournit une indication d'un couple d'entraînement fourni par le moteur (6) ;
   - déterminer une courbe de gradient à partir des valeurs détectées successivement de la grandeur de moteur ($I_{mot}$), dans lequel la courbe de gradient est déterminée à l'aide d'un procédé de dérivation qui prévoit une pondération des différentes valeurs détectées successivement de la grandeur de moteur ($I_{mot}$) en fonction de

la séquence de détection ;

- déterminer un instant d'activation d'une fonction de protection anti-coincement en fonction de la courbe de gradient déterminée, dans lequel l'instant d'activation de la fonction de protection anti-coincement est défini en fonction d'un rapport entre une puissance mécanique ($P_{mech}$) et une puissance électrique ($p_{el}$) du moteur (6).

2. Procédé selon la revendication 1, dans lequel l'instant d'activation de la fonction de protection anti-coincement est déterminé en fonction d'une détection d'un maximum local de la courbe de gradient déterminée.

3. Procédé selon la revendication 2, dans lequel l'instant d'activation de la fonction de protection anti-coincement est déterminé après qu'une valeur de gradient (SG) de la courbe de gradient (SG) a atteint une valeur négative et qu'un passage à zéro de la courbe de gradient (SG) se soit produit en sens positif.

4. Procédé selon la revendication 1 ou 2, dans lequel le procédé de dérivation est mis en oeuvre pour déterminer la courbe de gradient conformément à une fonction de transfert H(z) = K x [z-1/z-λ].

5. Dispositif d'activation d'une fonction de protection anti-coincement dans un système de fermeture électrique, dans lequel la fonction de protection anti-coincement est conçue pour interrompre un mouvement d'une partie fermante (2) dans une direction de mouvement lorsqu'il est détecté que le mouvement de la partie fermante (2) est entravé par un objet coincé, comprenant :

    - une unité de détection (9) destinée à fournir des valeurs détectées successivement d'une grandeur de moteur ($I_{mot}$) d'un moteur (6) qui provoque le mouvement de la partie fermante (2), dans lequel la grandeur de moteur ($I_{mot}$) fournit une indication d'un couple d'entraînement produit par le moteur (6) ;

    - une unité de commande (7) destinée à déterminer une courbe de gradient à partir des valeurs détectées successivement de la grandeur de mesure ($I_{mot}$), dans lequel la courbe de gradient est déterminée à l'aide d'un procédé de dérivation qui prévoit une pondération des différentes valeurs détectées successivement de la grandeur de moteur ($I_{mot}$) en fonction de leur séquence de détection, et pour déterminer un instant d'activation d'une fonction de protection anti-coincement en fonction de la courbe de gradient déterminée, dans lequel l'instant d'activation de la fonction de protection anti-coincement est défini en fonction d'un rapport entre la puissance mécanique ($P_{mech}$) et la puissance électrique ($P_{el}$) du moteur (6).

6. Système de moteur comportant un dispositif selon la revendication 5 et un moteur électrique (6).

7. Système de fermeture, et plus particulièrement, système de lève-vitre, comportant un système de moteur selon la revendication 6 et un mécanisme de fermeture (5) par l'intermédiaire duquel une partie fermante peut être déplacée.

8. Programme d'ordinateur qui, lorsqu'il est exécuté sur une unité de traitement de données, met en oeuvre un procédé selon l'une quelconque des revendications 1 à 4.

**Fig. 1**

# Fig. 2

# Fig. 3

EP 2 342 790 B1

# Fig. 4

EP 2 342 790 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0865137 A1
- EP 1168559 A1
- EP 0148318 A1
- WO 2006010349 A1